# EUROPÄISCHE PATENTANMELDUNG

(11) **EP 2 868 935 A1**
(43) Veröffentlichungstag der Anmeldung: **06.05.2015**
(21) Anmeldenummer: 13191527.4
(22) Anmeldetag: 05.11.2013
(51) Int. Cl.: F16B 25/00

(54) **Schraube, Gebäudehülle und Isolierverfahren**

(71) Anmelder: HILTI Aktiengesellschaft, 9494 Schaan (LI)
(72) Erfinder: Foser, Thomas, 9496 Balzers (LI); Baudy, Daniel, 6800 Feldkirch (AT)
(74) Vertreter: Hilti Aktiengesellschaft Corporate Intellectual Property

(57) **Zusammenfassung**

Schraube, umfassend einen Antrieb, eine in einer Eintreibrichtung von dem Antrieb beabstandete Bohrspitze zur Erzeugung eines Bohrlochs mit einer Bohrlochachse und einem Bohrlochdurchmesser, und einen sich von dem Antrieb zu der Bohrspitze erstreckenden Schaft, wobei der Schaft einen Anschlagabschnitt aufweist, welcher durch das Bohrloch durchführbar ist, wenn die Eintreibrichtung der Schraube gegenüber der Bohrlochachse gekippt ist, und welcher eine Anschlagfläche für eine Blockierung der Durchführung des Anschlagabschnitts durch das Bohrloch, wenn die Eintreibrichtung der Schraube parallel zur Bohrlochachse ausgerichtet ist, aufweist.

## Beschreibung

Die vorliegende Erfindung betrifft eine Schraube, eine Gebäudehülle sowie ein Verfahren zur Isolierung einer Gebäudewand oder eines Gebäudedaches.

Ein derartiges Verfahren ist aus der EP 510 563 B1 bekannt. Zur Isolierung einer hinterlüfteten Metallfassade wird das Isolierelement in ein an vertikalen Stahlträgern befestigtes Kassettenprofil mit Kassettenstegen eingesetzt. Zur Vermeidung von Wärmebrücken werden Abstandsleisten auf die Kassettenstege aufgesteckt und festgeschraubt, zwischen denen zusätzliche Dämmplatten untergebracht werden.

Der Erfindung liegt die Aufgabe zu Grunde, eine Schraube, eine Gebäudehülle sowie ein Verfahren zur Isolierung einer Gebäudewand oder eines Gebäudedachs zur Verfügung zu stellen, mit denen ein vereinfachtes Isolieren einer Gebäudehülle möglich ist.

Die Aufgabe wird bei einer Schraube, umfassend einen Antrieb, eine in einer Eintreibrichtung von dem Antrieb beabstandete Bohrspitze zur Erzeugung eines Bohrlochs mit einer Bohrlochachse und einem Bohrlochdurchmesser, und einen sich von dem Antrieb zu der Bohrspitze erstreckenden Schaft, dadurch gelöst, dass der Schaft einen Anschlagabschnitt aufweist, welcher durch das Bohrloch durchführbar ist, wenn die Eintreibrichtung der Schraube gegenüber der Bohrlochachse gekippt ist, und welcher eine Anschlagfläche für eine Blockierung der Durchführung des Anschlagabschnitts durch das Bohrloch aufweist, wenn die Eintreibrichtung der Schraube parallel zur Bohrlochachse ausgerichtet ist.

Eine vorteilhafte Ausführungsform ist dadurch gekennzeichnet, dass der Anschlagabschnitt einen ellipsenförmigen Querschnitt aufweist. Bevorzugt ist der Querschnitt kreisförmig.

Eine vorteilhafte Ausführungsform ist dadurch gekennzeichnet, dass der Anschlagabschnitt einen Knick des Schafts umfasst. Eine weitere vorteilhafte Ausführungsform ist dadurch gekennzeichnet, dass der Anschlagabschnitt einen Bogen des Schafts umfasst.

Eine vorteilhafte Ausführungsform ist dadurch gekennzeichnet, dass der Schaft zwischen dem Anschlagabschnitt und der Bohrspitze einen ersten Gewindeabschnitt mit einem ersten Gewinde trägt. Bevorzugt erstreckt sich das erste Gewinde entgegen der Eintreibrichtung bis zur Anschlagfläche oder über die Anschlagfläche hinaus. Gemäss einer alternativen Ausführungsform weist der Schaft zwischen der Anschlagfläche und dem ersten Gewinde einen ersten gewindefreien Abschnitt auf.

Eine vorteilhafte Ausführungsform ist dadurch gekennzeichnet, dass der Schaft zwischen dem Anschlagabschnitt und dem Antrieb einen zweiten Gewindeabschnitt mit einem zweiten Gewinde trägt. Bevorzugt weist das zweite Gewinde einen grösseren Aussendurchmesser auf als das erste Gewinde.

Bevorzugt umfasst der Antrieb einen Schraubenkopf. Besonders bevorzugt erstreckt sich das zweite Gewinde bis zu dem Schraubenkopf. Gemäss einer alternativen Ausführungsform weist der Schaft zwischen dem Schraubenkopf und dem zweiten Gewinde einen zweiten gewindefreien Abschnitt auf.

Eine vorteilhafte Ausführungsform ist dadurch gekennzeichnet, dass die Schraube in einer Gebäudehülle mit einer Wand oder einem Dach mit einem auf die Wand beziehungsweise das Dach aufgebrachten Isolierelement eingesetzt ist, um das Isolierelement an der Wand beziehungsweise dem Dach zu befestigen. Bevorzugt weist die Gebäudehülle eine Grundplatte und eine Deckplatte auf, wobei die Schraube die Deckplatte an der Grundplatte befestigt, und wobei ein Abstand der Deckplatte von der Grundplatte im Bereich der Schraube grösser ist als ein Abstand zwischen einem eintreibseitigen Ende der Bohrspitze und der Anschlagfläche der Schraube.

Gemäss einer vorteilhaften Weiterbildung weist die Gebäudehülle weiterhin einen von der Grundplatte abragenden Kassettensteg auf, an dem die Schraube befestigt ist. Die Grundplatte bildet dann zusammen mit dem Kassettensteg eine Kassette. Bevorzugt umfasst ein Material der Grundplatte, des Kassettenstegs und/oder der Deckplatte ein Metall oder eine Legierung.

Die Aufgabe wird bei einem Verfahren zur Isolierung einer Gebäudewand, bei dem eine Grundplatte an der Wand befestigt, ein Isolierelement an die Grundplatte angelegt, eine Deckplatte auf das Isolierelement aufgelegt und mittels der Schraube an der Grundplatte befestigt wird. Bevorzugt wird mit der Bohrspitze in der Deckplatte ein erstes Bohrloch gebohrt, die Schraube so weit durch das erste Bohrloch in der Deckplatte geführt, bis die Anschlagfläche an der Deckplatte anliegt, die Schraube gekippt, um den Anschlagabschnitt durch das erste Bohrloch zu befördern, die Schraube zurückgekippt, bis die Eintreibrichtung der Schraube senkrecht zu der Deckplatte im Bereich des ersten Bohrlochs ausgerichtet ist, die Schraube so weit durch das erste Bohrloch in der Deckplatte geführt, bis die Bohrspitze an der Grundplatte anliegt, mit der Bohrspitze in der Grundplatte ein zweites Bohrloch gebohrt, und die Schraube so weit durch das erste und das zweite Bohrloch geführt, bis die Anschlagfläche an der Grundplatte anliegt.

Die Erfindung wird im Folgenden unter Bezugnahme auf die Zeichnungen näher erläutert. Es zeigen:
- Fig. 1: einen Ausschnitt einer Gebäudehülle in einem Querschnitt während einer Befestigung und
- Fig. 2: den Ausschnitt der Gebäudehülle nach der Befestigung.

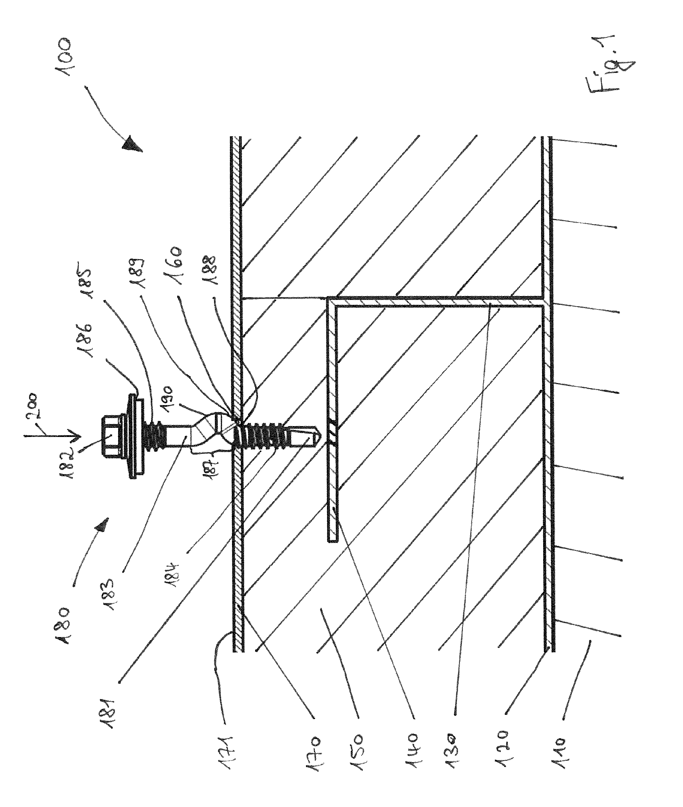

In Fig. 1 ist eine Gebäudehülle 100 im Querschnitt dargestellt, mit an eine Wand 110 geschraubten oder genagelten Grundplatten 120, von denen jeweils zur Bildung einer Stahlkassette ein Kassettensteg 130 abragt. Die Kassettenstege 130 weisen jeweils einen rechtwinklig abgewinkelten Befestigungsbereich 140 auf. In die Kassetten ist jeweils ein als Isolierplatte 150 ausgebildetes Isolierelement eingelegt. Gegenüber der Umgebung ist das Isolierelement 150 mit einer Deckplatte 170 abgedeckt, welche mittels einer Schraube 180 über den Kassettensteg 130 an der Grundplatte 120 befestigt wird. Die Deckplatte 170 ist als Stahlblech ausgebildet. Bei nicht gezeigten Ausführungsbeispielen ist die Deckplatte aus Kunststoff gefertigt und/oder ist als Folie ausgebildet. Die Isolierplatte 150 weist ein kompressibles Isolationsmaterial auf, beispielsweise Mineralwolle wie Steinwolle oder Glaswolle.

Die Schraube 180 weist einen als Schraubenkopf 182 ausgebildeten Antrieb sowie eine von dem Schraubenkopf 182 in einer Eintreibrichtung 200 beabstandete Bohrspitze 181 zum Bohren eines ersten Bohrloches 160 in die Deckplatte 170 sowie eines zweiten Bohrloches in den Befestigungsbereich 140 auf. Zwischen der Bohrspitze 181 und dem Schraubenkopf 182 der Schraube 180 erstreckt sich ein Schaft 183, welcher in einem ersten Gewindeabschnitt ein sich an die Bohrspitze 181 anschliessendes, selbstschneidendes erstes Gewinde 184 und in einem zweiten Gewindeabschnitt ein zweites Gewinde 185 trägt. Das zweite Gewinde 185 weist dabei einen grösseren Durchmesser auf als das erste Gewinde 184. Unterhalb des Kopfes 182 ist eine Dichtscheibenanordnung 186 mit einer Dichtscheibe und einer Abdeckscheibe auf den Schraubenschaft 183 aufgezogen.

Der Schraubenschaft 183 umfasst einen Anschlagabschnitt 187 mit einem Knick 188 des Schafts 183, einer Anschlagfläche 189 sowie einem Bogen 190 des Schafts 183. Die Anschlagfläche 189 wird dabei aufgrund des Knicks 188 durch eine Umfangsfläche des Schafts 183 gebildet und blockiert in der in Fig. 1 gezeigten Stellung eine Durchführung des Anschlagabschnitts 187 durch das erste Bohrloch 160. Der Schaft 183 hat überall, insbesondere im Bereich des Anschlagabschnitts, einen kreisförmigen Querschnitt. Das erste Gewinde 184 erstreckt sich entgegen der Eintreibrichtung 200 bis zur Anschlagfläche 189 und das zweite Gewinde 185 erstreckt sich entgegen der Eintreibrichtung 200 bis zur Dichtscheibenanordnung 186. Bei nicht gezeigten Ausführungsbeispielen weist der Schaft zwischen der Anschlagfläche und dem ersten Gewinde und/oder zwischen der Dichtscheibenanordnung und dem zweiten Gewinde einen gewindefreien Abschnitt auf.

Zur Isolierung der Gebäudehülle 100 wird zunächst die Grundplatte 120 an der Wand 110 befestigt. Anschliessend wird das Isolierelement 150 an die Grundplatte 120 angelegt sowie die Deckplatte 170 auf das Isolierelement 150 aufgelegt und mittels der Schraube 180 an der Grundplatte befestigt. Dabei wird zunächst mit der Bohrspitze 181 in der Deckplatte 170 das erste Bohrloch 160 gebohrt, so dass das erste Bohrloch 160 eine zur Oberfläche 171 der Deckplatte 170 senkrechte Bohrlochachse aufweist. Der Bohrlochdurchmesser des ersten Bohrlochs 160 ist dann so gross wie der Aussendurchmesser der Bohrspitze 181. Anschliessend wird die Schraube 180 mittels des ersten Gewindes 184, das einen grösseren Aussendurchmesser als die Bohrspitze 181 und demzufolge das erste Bohrloch 160 aufweist, so weit durch das erste Bohrloch geschraubt, bis die Anschlagfläche 189 an der Oberfläche 171 der Deckplatte 170 anliegt. Die in Fig. 1 gezeigte Stellung ist dann erreicht. Eine Durchführung des Anschlagabschnitts 187 durch das erste Bohrloch 160 ist durch die Anschlagfläche 189 blockiert, solange die Eintreibrichtung 200 der Schraube 180 parallel zur Bohrlochachse des ersten Bohrlochs 160, also senkrecht zur Oberfläche 171 der Deckplatte 170, ausgerichtet ist.

Um den Anschlagabschnitt 187 durch das erste Bohrloch 160 zu befördern, wird die Schraube 180 anschliessend gekippt. In Fig. 1 ist dabei der Schraubenkopf 182 nach links zu kippen. Da der Durchmesser des Schafts 183 im Bereich des Anschlagabschnitts 187 den Bohrlochdurchmesser des ersten Bohrlochs 160 nicht übersteigt, lässt sich die Schraube 180 dann weiter durch das erste Bohrloch 160 weiter durchstecken. Schliesslich wird die Schraube 180 zurückgekippt, bis ihre Eintreibrichtung 200 wieder senkrecht zur Oberfläche 171 der Deckplatte 170 ausgerichtet ist, und so weit durch das erste Bohrloch 160 gesteckt, bis die Bohrspitze 181 an dem Befestigungsbereich 140 der Grundplatte 120 anliegt. Das Kippen der Schraube 180 wird auch dadurch ermöglicht, dass der Abstand der Deckplatte 170 von dem Befestigungsbereich 140 grösser ist als der Abstand zwischen dem eintreibseitigen Ende der Bohrspitze 181 und der Anschlagfläche 189 der Schraube 180, sowie dadurch, dass die Isolierplatte 150 einer derartigen Bewegung der Schraube 180 nachgibt.

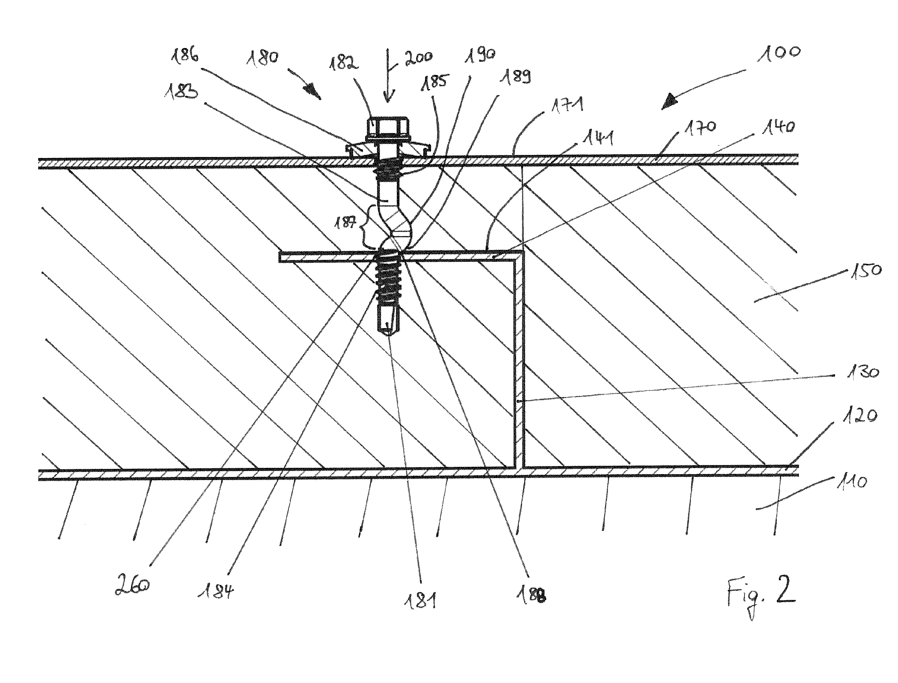

Dann wird in dem Befestigungsbereich 140 mittels der Bohrspitze 181 ein zweites Bohrloch 260 gebohrt, so dass auch das zweite Bohrloch 260 eine zur Oberfläche 171 der Deckplatte 170 senkrechte Bohrlochachse aufweist. Der Bohrlochdurchmesser des zweiten Bohrlochs 160 ist dann ebenfalls so gross wie der Aussendurchmesser der Bohrspitze 181. Anschliessend wird die Schraube 180 mittels des ersten Gewindes 184, so weit durch das zweite Bohrloch geschraubt, bis die Anschlagfläche 189 an der Oberfläche 141 des Befestigungsbereichs 140 anliegt. Die in Fig. 2 gezeigte Stellung ist dann erreicht. Eine Durchführung des Anschlagabschnitts 187 durch das zweite Bohrloch 260 ist durch die Anschlagfläche 189 blockiert, da die Eintreibrichtung 200 der Schraube 180 parallel zur Bohrlochachse des zweiten Bohrlochs 160, also senkrecht zur Oberfläche 141 des Befestigungsbereichs 140, ausgerichtet ist. Ein Kippen der Schraube 180 ist nicht mehr möglich, da die Schraube 180 sowohl im ersten Bohrloch 160 als auch im zweiten Bohrloch 260 gehalten ist. Zur Abdichtung des Bohrloches 160 in der Deckplatte 170 presst der Kopf 182 die Dichtscheibenanordnung 186 gegen die Deckplatte 170.

Ausserdem ist die Deckplatte 170 nur über die Isolationsplatte 150 und die Schraube 180 mit der Grundplatte 120 verbunden. Der Abstand zwischen der Grundplatte 120 und der Deckplatte 170 wird alleine durch die Schraube 180 bestimmt und entspricht, auf den Befestigungsbereich 140 bezogen, dem Abstand zwischen dem Schraubenkopf 182 und der Anschlagfläche 189, gegebenenfalls reduziert um die Dicke der Dichtscheibenanordnung 186, jeweils in Eintreibrichtung gesehen. Ein Vorbohren eines der Bohrlöcher, beispielsweise um einen den Durchmesser des Schafts überragenden Anschlag hindurchzuführen, ist mit der beschriebenen Schraube nicht erforderlich.

Die Erfindung wurde anhand des Beispiels einer Gebäudeisolierung beschrieben. Es wird jedoch darauf hingewiesen, dass die erfindungsgemässe Schraube auch für andere Zwecke geeignet ist.

## Patentansprüche

1. Schraube, umfassend einen Antrieb, eine in einer Eintreibrichtung von dem Antrieb beabstandete Bohrspitze zur Erzeugung eines Bohrlochs mit einer Bohrlochachse und einem Bohrlochdurchmesser, und einen sich von dem Antrieb zu der Bohrspitze erstreckenden Schaft, wobei der Schaft einen Anschlagabschnitt aufweist, welcher durch das Bohrloch durchführbar ist, wenn die Eintreibrichtung der Schraube gegenüber der Bohrlochachse gekippt ist, und welcher eine Anschlagfläche für eine Blockierung der Durchführung des Anschlagabschnitts durch das Bohrloch, wenn die Eintreibrichtung der Schraube parallel zur Bohrlochachse ausgerichtet ist, aufweist.

2. Schraube nach Anspruch 1, wobei der Anschlagabschnitt einen ellipsenförmigen, insbesondere kreisförmigen Querschnitt aufweist.

3. Schraube nach einem der vorhergehenden Ansprüche, wobei der Anschlagabschnitt einen Knick und/oder einen Bogen des Schafts umfasst.

4. Schraube nach einem der vorhergehenden Ansprüche, wobei der Schaft zwischen dem Anschlagabschnitt und der Bohrspitze einen ersten Gewindeabschnitt mit einem ersten Gewinde trägt.

5. Schraube nach Anspruch 4, wobei sich das erste Gewinde entgegen der Eintreibrichtung bis zur Anschlagfläche oder über die Anschlagfläche hinaus erstreckt.

6. Schraube nach Anspruch 4, wobei der Schaft zwischen der Anschlagfläche und dem ersten Gewinde einen ersten gewindefreien Abschnitt aufweist.

7. Schraube nach einem der vorhergehenden Ansprüche, wobei der Schaft zwischen dem Anschlagabschnitt und dem Antrieb einen zweiten Gewindeabschnitt mit einem zweiten Gewinde trägt.

8. Schraube nach Anspruch 7, wobei das zweite Gewinde einen grösseren Aussendurchmesser aufweist als das erste Gewinde.

9. Schraube nach Anspruch 7 oder 8, wobei der Antrieb einen Schraubenkopf umfasst, und wobei sich das zweite Gewinde bis zu dem Schraubenkopf erstreckt.

10. Schraube nach Anspruch 7 oder 8, wobei der Antrieb einen Schraubenkopf umfasst, und wobei der Schaft zwischen dem Schraubenkopf und dem zweiten Gewinde einen zweiten gewindefreien Abschnitt aufweist.

11. Gebäudehülle mit einer Wand oder einem Dach, mit einem auf die Wand beziehungsweise das Dach aufgebrachten Isolierelement, welches mit einer Schraube nach einem der vorhergehenden Ansprüche an der Wand beziehungsweise dem Dach befestigt ist.

12. Gebäudehülle nach Anspruch 11, weiterhin aufweisend eine Grundplatte und eine Deckplatte, wobei die Schraube die Deckplatte an der Grundplatte befestigt, und wobei ein Abstand der Deckplatte von der Grundplatte im Bereich der Schraube grösser ist als ein Abstand zwischen einem eintreibseitigen Ende der Bohrspitze und der Anschlagfläche der Schraube.

13. Verfahren zur Isolierung einer Gebäudewand, umfassend die Schritte
a) Befestigen einer Grundplatte an der Wand,
b) Anlegen eines Isolierelements an die Grundplatte,
c) Auflegen einer Deckplatte auf das Isolierelement,
d) Befestigen der Deckplatte an der Grundplatte mittels einer Schraube nach einem der Ansprüche 1 bis 10.

14. Verfahren nach Anspruch 13, bei dem
d1) mit der Bohrspitze in der Deckplatte ein erstes Bohrloch gebohrt wird,
d2) die Schraube so weit durch das erste Bohrloch in der Deckplatte geführt wird, bis die Anschlagfläche an der Deckplatte anliegt,
d3) die Schraube gekippt wird, um den Anschlagabschnitt durch das erste Bohrloch zu befördern,
d4) die Schraube zurückgekippt wird, bis die Eintreibrichtung der Schraube senkrecht zu der Deckplatte im Bereich des ersten Bohrlochs ausgerichtet ist,
d5) die Schraube so weit durch das erste Bohrloch in der Deckplatte geführt wird, bis die Bohrspitze an der Grundplatte anliegt,
d6) mit der Bohrspitze in der Grundplatte ein zweites Bohrloch gebohrt wird,
d7) die Schraube so weit durch das erste und das zweite Bohrloch geführt wird, bis die Anschlagfläche an der Grundplatte anliegt.
